# EUROPÄISCHE PATENTSCHRIFT

(11) **EP 2 883 755 B1**
(45) Veröffentlichungstag und Bekanntmachung des Hinweises auf die Patenterteilung: **29.03.2017**
(21) Anmeldenummer: 14003321.8
(22) Anmeldetag: 25.09.2014
(51) Int. Cl.: B60R 21/013, B60G 17/00, B60R 19/56

(54) **Verfahren zum Betrieb eines Sicherheitssystems eines Kraftfahrzeugs und Kraftfahrzeug**
Method for operating a safety system of a motor vehicle and motor vehicle
Procédé destiné au fonctionnement d'un système de sécurité d'un véhicule automobile et véhicule automobile

(30) Priorität: 14.12.2013 DE 102013021346
(43) Veröffentlichungstag der Anmeldung: 17.06.2015
(73) Patentinhaber: AUDI AG, 85045 Ingolstadt (DE)
(72) Erfinder: Buchholz, Jan, 84030 Ergolding (DE)
(74) Vertreter: Thielmann, Frank

(56) Entgegenhaltungen:
- WO-A1-01/26922
- WO-A1-2006/032365
- WO-A1-2007/003328
- DE-A1- 10 316 847
- DE-A1- 10 337 620
- DE-A1- 10 352 186
- JP-A- H11 348 523

## Beschreibung

Die Erfindung betrifft ein Verfahren zum Betrieb eines Sicherheitssystems eines ersten Kraftfahrzeugs zur Kollisionsvermeidung und/oder Kollisionsfolgenminderung, wobei wenigstens ein die mögliche Kollision mit einem zweiten Kraftfahrzeug beschreibender Kollisionsparameter durch Auswertung von Umfelddaten über das Umfeld des eigenen Kraftfahrzeugs und Egodaten über das eigene Kraftfahrzeug ermittelt wird und bei Erfüllung wenigstens eines den Kollisionsparameter auswertenden Kollisionskriteriums wenigstens ein weiteres Fahrzeugsystem zur Durchführung einer Maßnahme angesteuert wird. Daneben betrifft die Erfindung ein Kraftfahrzeug mit einem Sicherheitssystem.

Sicherheitssysteme, die auf die Kollisionsvermeidung und/oder Kollisionsfolgenminderung abzielen, wurden bereits vorgeschlagen. Eingangsdaten, die üblicherweise Egodaten, die den Betriebszustand des eigenen Kraftfahrzeugs beschreiben, und Umfelddaten, die das Umfeld des Kraftfahrzeugs insbesondere im Hinblick auf einen möglichen Kollisionspartner, insbesondere ein zweites Kraftfahrzeug, beschreiben, umfassen, werden durch wenigstens ein Steuergerät ausgewertet, um abschätzen zu können, ob eine Kollision droht, mithin Kollisionsparameter zu bestimmen. Umfelddaten können dabei über Umfeldsensoren, beispielsweise Radarsensoren und optische Sensoren, geliefert werden, aber auch über die Kraftfahrzeug-zu-Kraftfahrzeug-Kommunikation, beispielsweise bei Austausch eines Pre-Crash-Containers. Typische Kollisionsparameter, die in einem solchen Fall bestimmt werden, sind die Zeit bis zur Kollision (Time to Collision - TTC) und eine Kollisionswahrscheinlichkeit, wobei auch bereits andere Kollisionsparameter, insbesondere solche, die die Kollisionsschwere und/oder die Kollisionsgeschwindigkeit, beschreiben, vorgeschlagen wurden. Diese Kollisionsparameter werden nun gegen Kollisionskriterien geprüft, um festzustellen, ob Maßnahmen zur Kollisionsvermeidung und/oder Kollisionsfolgenminderung notwendig sind. Eine erste Maßnahme in unkritischen Fällen kann beispielsweise die Ausgabe einer Warnung an einen Fahrer sein; spätere Maßnahmen können Eingriffe in das Fahrverhalten des Kraftfahrzeugs beinhalten, beispielsweise durch Aktivieren eines Notbremssystems, sowie weitere, aktive Sicherheitssysteme betreffen, beispielsweise Gurtstraffer, Airbags und dergleichen.

Bei einer besonders kritischen Art von Unfällen tritt ein Unterfahren des einen Kraftfahrzeugs durch das andere Kraftfahrzeug auf. Derartige Kollisionen werden auch als Unterfahrunfälle bezeichnet. Dabei ist es häufig so, dass ein bauartbedingt niedrigeres Fahrzeug, beispielsweise ein Sportwagen, unter ein bauartbedingt höheres Fahrzeug, beispielsweise einen LKW oder ein SUV, auffährt. Bei SUV ist dies besonders kritisch, wenn das SUV stark bremst, da dann das SUV stark nach vorne eintaucht, mithin einen großen Nickwinkel aufweist.

DE 103 16 847 A1 beschreibt eine Unterfahrschutzeinrichtung und ein Verfahren zum Betreiben einer Unterfahrschutzeinrichtung, bei der unterhalb eines Stoßfängers an einer Frontpartie des Kraftfahrzeugs ein als Unterfahrschutz dienendes Flächenelement vorgesehen ist, welches mittels eines befüllbaren Luftsacks aus einer eingefahrenen Ruhelage in eine ausgefahrene Schutzstellung verlagerbar ist, in der die lichte Höhe zwischen der Fahrbahn und der Karosserie verringert wird. Allerdings ist dort keine Möglichkeit diskutiert, einen (möglichen) Unterfahrunfall festzustellen.

Ob ein Unterfahrunfall droht, ließe sich beispielsweise durch einen Vergleich der Nickwinkel des eigenen Kraftfahrzeugs und des Kollisionspartners verbessert beurteilen, wobei der bei nickenden Fremdfahrzeugen auftretende Eintauchvorgang sensorisch nicht hinreichend gut zu erfassen ist, um darauf basierend Gegenmaßnahmen einzuleiten. Insbesondere die häufig diesbezüglich ausgewerteten Umfelddaten von Kameras, insbesondere auch Stereokameras, sind zur hinreichend genauen Bestimmung von Nickzuständen anderer Kraftfahrzeuge ungeeignet.

DE 10 2004 007 792 A1 betrifft eine Sicherheitsvorrichtung für ein Kraftfahrzeug, wobei ein Drucksensor verwendet wird, der in einem oberen Bereich des Kraftfahrzeugs zur Erkennung einer Unterfahrung eines Hindernisses angeordnet ist. Ein derartiger Drucksensor soll eine Unterfahrung des Hindernisses ohne eine Beschleunigungserfassung mit großer Zuverlässigkeit erkennen.

DE 103 37 620 A1 betrifft ein Kraftfahrzeug mit einem Pre-Safe-System. Dabei soll zum besseren Schutz der Insassen kollisionsgefährderter Kraftfahrzeuge eine Fahrwerkregelung, die eine Federungs- und Dämpfungseinrichtung ansteuert, eine wenigstens annähernd hubartige Fahrzeugniveauverstellung durchzuführen. Damit soll unter anderem ein Unterfahren vermieden werden.

DE 103 52 186 A1 offenbart ein Fahrzeug, insbesondere ein Kraftfahrzeug. Dabei können Kollisionsparameter eines potentiellen Kollisionsgegners als Unfallsignal erfasst werden, woraufhin in Abhängigkeit des Unfallsignals der Fahrzeugaufbau auf eine optimale Unfallposition anhebbar und/oder absenkbar sein soll. Das Anheben des Fahrzeugaufbaus soll durch eine Ventilsteuereinrichtung geschehen. Über eine Sensoreinrichtung können als Kollisionsparameter auch der Objektwinkel und/oder geometrische Parameter des Objekts sensiert werden.

Der Erfindung liegt daher die Aufgabe zugrunde, ein Sicherheitssystem für ein Kraftfahrzeug derart auszubilden, dass ein verbesserter Schutz durch eine verbesserte Erkennung von Auffahrunfällen gegeben ist. Das Dokument JP11348523 offenbart ein Verfahren zum Betrieb eines Sicherheitssystems gemäß dem Oberbegriff des Anspruchs 1.

Zur Lösung dieser Aufgabe ist bei einem Verfahren der eingangs genannten Art erfindungsgemäß vorgesehen, dass wenigstens ein auf einen Unterfahrunfall bezogener Kollisionsparameter in Abhängigkeit eines von dem zweiten Kraftfahrzeug über Kraftfahrzeug-zu-Kraftfahrzeug-Kommunikation übermittelten Nickwinkels des zweiten Kraftfahrzeugs ermittelt und zur Auslösung einer auf die Verhinderung und/oder Folgenminderung eines Unterfahrunfalls zielenden Maßnahme ausgewertet wird.

Der Erfindung liegen somit zwei grundlegende Erkenntnisse zugrunde. Die erste ist, dass unter Kenntnis des Nickwinkels des möglichen Kollisionspartners eine deutlich bessere Analyse der Situation im Hinblick auf einen Unterfahrunfall möglich ist, so dass die Auslösung von einen Unterfahrunfall betreffenden Maßnahmen, insbesondere irreversiblen Maßnahmen, basierend auf einem derartigen, verbessert ermittelten Kollisionsparameter zweckmäßiger und zielgerichteter möglich ist, so dass insgesamt eine Erhöhung der Sicherheit erfolgt. Die zweite Erkenntnis ist, dass der Nickwinkel, der das Eintauchen eines Kraftfahrzeugs bestimmt, sich am besten über die Eigensensorik, beispielsweise eine Inertialsensorik, des jeweiligen Kraftfahrzeugs erfassen lässt. Mithin wird vorgeschlagen, diesen Nickwinkel über Kraftfahrzeug-zu-Kraftfahrzeug-Kommunikation an das andere an dem möglichen Unterfahrunfall beteiligte Kraftfahrzeugs zu übermitteln, so dass die Information auch im dortigen Sicherheitssystem vorliegt, wobei die Zuordnung des Nickwinkels zum Kollisionsobjekt, hier dem zweiten Kraftfahrzeug, wie grundsätzlich bekannt durch die Fusion von Sensordaten erfolgt. Aufgrund insbesondere auch des eigenen Nickwinkels und des Fremdnickwinkels ist verbessert ermittelbar, ob bei einer drohenden Kollision, die über bekannte Kollisionsparameter, beispielsweise die Kollisionsgeschwindigkeit, die Kollisionswahrscheinlichkeit und/oder die TTC, detektiert werden kann, die Gefahr des Unterfahrens besteht. Dies wiederum ermöglicht das Einleiten von Gegenmaßnahmen zur Kollisionsabschwächung und/oder Kollisionsvermeidung, wie sie zumindest teilweise im Stand der Technik bereits bekannt sind. Die Kritikalitätsbewertung bezüglich von Unterfahrunfällen lässt sich mithin deutlich verbessern. Dabei sei an dieser Stelle noch darauf hingewiesen, dass es selbstverständlich besonders vorteilhaft ist, wenn das erste und das zweite Kraftfahrzeug jeweils ein zur Durchführung des erfindungsgemäßen Verfahrens geeignetes Sicherheitssystem umfassen, worauf im Folgenden noch näher eingegangen werden wird.

In vorteilhafter Ausgestaltung der vorliegenden Erfindung kann vorgesehen sein, dass bei der Ermittlung des auf einen Unterfahrunfall bezogenen Kollisionsparameters zusätzlich wenigstens ein Nickwinkel des eigenen Kraftfahrzeugs und/oder eine auf die lichte Höhe der Karosserie über dem Boden und/oder die Gesamthöhe der Karosserie über dem Boden im möglichen Kollisionsbereich bezogene Karosserieinformation beider Kraftfahrzeuge berücksichtigt werden. Dabei kann als Karosserieinformation des zweiten Kraftfahrzeugs, nachdem die Karosserieinformation des eigenen Kraftfahrzeugs leicht in diesem eingespeichert werden kann, ein insbesondere über Kraftfahrzeug-zu-Kraftfahrzeug-Kommunikation übertragenes Fahrzeugtypdatum und/oder Fahrzeugklassendatum verwendet werden. Ein derartiges Fahrzeugtypdatum und/oder Fahrzeugklassendatum ermöglicht es, beispielsweise aus einer Look-up-Tabelle oder sonstigen Datenbank Informationen über die Karosserie des zweiten Kraftfahrzeugs leicht zu ermitteln. Dabei kann das Fahrzeugtypdatum und/oder das Fahrzeugklassendatum, welches in grober Abstraktion angeben könnte, ob es sich um einen Sportwagen, einen normalen Pkw, einen SUV oder einen Lkw handelt, aber auch differenziertere Information enthalten kann, bevorzugt gemeinsam mit dem Nickwinkel über die Kraftfahrzeug-zu-Kraftfahrzeug-Kommunikation übermittelt werden, wobei es jedoch auch denkbar ist, ein Fahrzeugtypdatum und/oder ein Fahrzeugklassendatum aus mit Umfeldsensoren des eigenen Kraftfahrzeugs aufgenommenen Umfelddaten zu ermitteln, beispielsweise durch Bildverarbeitung. Insbesondere lässt sich ein drohender Unterfahrunfall besonders genau ermitteln, wenn der Egonickwinkel des eigenen, ersten Kraftfahrzeugs und der Fremdnickwinkel des Kollisionspartners, also des zweiten Kraftfahrzeugs, in Kombination mit Karosserieinformationen beider Kraftfahrzeuge, insbesondere dem Fahrzeugtyp beider Kraftfahrzeuge, betrachtet werden.

Zweckmäßigerweise kann bei Erfüllung eines Übersendungskriteriums eine den Nickwinkel des eigenen Kraftfahrzeugs umfassende Unterfahrunfallinformation über Kraftfahrzeug-zu-Kraftfahrzeug-Kommunikation an das zweite Kraftfahrzeug übertragen werden. Weist das zweite Kraftfahrzeug selbst ein erfindungsgemäßes Sicherheitssystem auf, kann diese Funktionalität mithin die Ursache für die Übermittlung des Nickwinkels des zweiten Kraftfahrzeugs sein, das bedeutet, aus der Sicht des zweiten Kraftfahrzeugs entspricht dieses dem ersten Kraftfahrzeug und das erste Kraftfahrzeugs dem zweiten Kraftfahrzeug. Daher ist das Zusammenwirken solcher Sicherheitssysteme im ersten und im zweiten Kraftfahrzeug insbesondere dann wichtig und nützlich, wenn für eines der Kraftfahrzeuge keinerlei Maßnahmen zur Verfügung stehen, um selbst einen Unterfahrunfall zu vermeiden und/oder dessen Folgen zu mindern, wobei durch Übertragung des Nickwinkels jedenfalls dem Kollisionspartner die Möglichkeit gegeben wird, verlässlich die Wahrscheinlichkeit eines Unterfahrens zu bestimmen und entsprechend dort auf die Verhinderung und/oder Folgenminderung eines Unterfahrunfalls zielende Maßnahmen auszulösen.

Als Übersendungskriterium können das Überschreiten eines Schwellwerts für den Nickwinkel und/oder die Bremsverzögerung des eigenen Kraftfahrzeugs und/oder ein wenigstens einen Kollisionsparameter auswertendes, die Möglichkeit eines Unterfahrunfalls beschreibendes Übersendungskriterium verwendet werden. Besonders bevorzugt eine Übersendung dann, wenn beim eigenen Kraftfahrzeug starke Nickbewegungen auftreten, was über einen Schwellwert für dem Nickwinkel beziehungsweise die Bremsverzögerung beschrieben werden kann. So führt ein starkes Bremsen üblicherweise dazu, dass die Wahrscheinlichkeit für ein Unterfahren bei Kollision mit einem voranfahrenden zweiten Kraftfahrzeug aufgrund des stattfinden Eintauchvorgangs erhöht wird; gleichzeitig erhöht sich bei höheren Kraftfahrzeugen, beispielsweise SUV, während eines starken Bremsvorgangs das Unterfahrrisiko für niedrige, nachfolgende zweite Kraftfahrzeuge. Beispielsweise kann mithin bei einem starken Bremsvorgang eines SUV, bei dem der Nickwinkel einen Schwellwert überschreitet, der Nickwinkel an ein nachfolgendes zweites Kraftfahrzeug übermittelt werden, welches ebenso ein Sicherheitssystem aufweist, das zur Durchführung des erfindungsgemäßen Verfahrens ausgebildet ist, mithin den auf einen Unterfahrunfall bezogenen Kollisionsparameter ermitteln und entscheiden, ob Gegenmaßnahmen eingeleitet werden sollen, beispielsweise das Zünden eines Außenairbags an der Frontstoßstange. Jedoch können auch bereits eigene Beurteilungen der Kollisionssituation, mithin Kollisionsparameter, auf ein sinnvolles Übersenden des Nickwinkels an den Kollisionspartner, also das zweite Kraftfahrzeug, hinweisen, beispielsweise dann, wenn ohnehin eine hohe Kollisionswahrscheinlichkeit gegeben ist und weiter gefährdende Tatbestände auch seitens des anderen Kraftfahrzeugs zu klären sind, insbesondere ein auftretendes Unterfahren.

Dabei sei darauf hingewiesen, dass die Unterfahrunfallinformation selbstverständlich auch weitere nützliche Daten enthalten kann, insbesondere das bereits erwähnte Fahrzeugtypdatum und/oder Fahrzeugklassendatum. Weitere nützliche Inhalte der Unterfahrunfallinformation sind bereits durchgeführte Analysen der Kollisionssituation, so dass beispielsweise auch Kollisionsparameter, beispielsweise eine im eigenen Kraftfahrzeug ermittelte Kollisionswahrscheinlichkeit, eine Kollisionsgeschwindigkeit, eine Zeit bis zur Kollision (TTC) und dergleichen als Teil der Unterfahrunfallinformation übertragen werden.

Eine zweckmäßige Ausgestaltung der vorliegenden Erfindung sieht ferner vor, dass bei Empfang eines Nickwinkels des zweiten Kraftfahrzeugs über Kraftfahrzeug-zu-Kraftfahrzeug-Kommunikation als Übersendungskriterium dem zweiten Kraftfahrzeug eine dem Nickwinkel des eigenen Kraftfahrzeugs beschreibende Unterfahrunfallinformation über Kraftfahrzeug-zu-Kraftfahrzeug-Kommunikation übermittelt wird. Ein spezielles Übersendungskriterium stellt also dar, dass man selbst einen Nickwinkel des zweiten Kraftfahrzeugs erhalten hat, so dass mithin eine Art "Request-Response-Verfahren" realisiert ist.

Dabei sei an dieser Stelle hingewiesen, dass alternativ und/oder zusätzlich zu der hier beschriebenen eventbasierten Übertragung des Nickwinkels grundsätzlich auch eine zyklische Übertragung des Nickwinkels beziehungsweise der Unterfahrunfallinformation über Kraftfahrzeug-zu-Kraftfahrzeug-Kommunikation realisierbar ist.

Vorzugsweise kann als eine auf die Verhinderung und/oder Folgenminderung eines Unterfahrunfalls zielende Maßnahme eine auf den möglichen Unterfahrunfall bezogene Maßnahmeninformation an das zweite Kraftfahrzeug übermittelt werden. Stellt das erste Kraftfahrzeug mithin fest, dass ein Unterfahrunfall droht, kann es eine Maßnahmeninformation, die diesen beschreibt, beispielsweise also Kollisionsparameter enthält, zurück an das zweite Kraftfahrzeug übermitteln, so dass dieses eigene Folgemaßnahmen, die auf die Verhinderung und/oder Folgenminderung des Unterfahrunfalls zielen, einleiten kann. Mithin kann vorgesehen sein, dass bei Empfang einer Maßnahmeninformation wenigstens eine auf die Verhinderung und/oder Folgenminderung eines Unterfahrunfalls zielende Folgemaßnahme eingeleitet wird.

Eine Weiterbildung der Erfindung sieht vor, dass als auf die Verhinderung und/oder Folgenminderung eines Unterfahrunfalls zielende Maßnahme im Bereich der möglichen Kollision ein die Gesamthöhe der Karosserie über den Boden und/oder die lichte Höhe der Karosserie über dem Boden beeinflussendes Fahrzeugsystem aktiviert wird. Derartige Maßnahmen suchen ein Unterfahren dadurch zu vermeiden, dass idealerweise die Bedingungen hierfür verschlechtert werden, mithin beispielsweise die durch Zusatzelemente ergänzte Karosserie des unterfahrenden Kraftfahrzeugs höher liegt, wofür beispielsweise ein prall gefüllter Außenairbag verwendet werden kann, und/oder die lichte Höhe über der Fahrbahn durch bestimmte Maßnahmen beim unterfahrenen Kraftfahrzeug verringert wird, beispielsweise durch eine Maßnahme, wie sie die DE 103 16 847 A1 für die Frontpartie eines Kraftfahrzeugs beschreibt.

Insbesondere kann das aktivierte Fahrzeugsystem als Maßnahme also einen insbesondere eine Karosserieerweiterungsfläche bewegenden Außenairbag auslösen, wobei der Außenairbag selbst in Spezialfällen wenigstens teilweise als eine Karosserieerweiterungsfläche wirken kann.

Es kann jedoch auch vorgesehen sein, dass das aktivierte Fahrzeugsystem, insbesondere ein aktives Fahrwerk, wenigstens eine Höhenverstellung der gesamten Karosserie verändert und/oder den Nickwinkel des eigenen Kraftfahrzeugs beeinflusst. Es sind bereits aktive Fahrwerksysteme vorgeschlagen worden, die die Höhe der Gesamtkarosserie/des Fahrzeugaufbaus beeinflussen können, beispielsweise also das Fahrzeug heben oder senken können. Derartige Maßnahmen können auch zur Kollisionsfolgenminderung beitragen. Auch können solche tiefen Fahrwerksysteme beispielsweise die Nicklage des Kraftfahrzeugs selbst beeinflussen, mithin gegebenenfalls den Nickwinkel verändern, wobei im Übrigen zweckmäßigerweise bei einer insbesondere einen Schwellwert überschreitenden Änderung des Nickwinkels auch eine neue Übersendung an den Kollisionspartner stattfinden kann.

Neben dem Verfahren betrifft die vorliegenden Erfindung auch ein Kraftfahrzeug, umfassend ein Sicherheitssystem mit einem zur Durchführung des erfindungsgemäßen Verfahrens ausgebildeten Steuergerät. Sämtliche Ausführungen zum erfindungsgemäßen Verfahren lassen sich analog auf das erfindungsgemäße Kraftfahrzeug übertragen, mit welchem mithin die genannten Vorteile erhalten werden können. Insbesondere umfasst das Kraftfahrzeug mithin wenigstens einen Umfeldsensor zur Aufnahme von Umfelddaten, wenigstens einen Egosensor und/oder wenigstens ein Ego-System zur Aufnahme von Egodaten und eine Kraftfahrzeug-zu-Kraftfahrzeug-Kommunikationseinrichtung zur Übertragung der Nickwinkel. Weitere Fahrzeugsysteme sind vorgesehen, um die gegebenenfalls notwendigen Maßnahmen zur Kollisionsvermeidung und/oder Kollisionsfolgenminderung durchzuführen.

Eine besonders vorteilhafte Ausgestaltung der vorliegenden Erfindung, die auch unabhängig von der Realisierung des erfindungsgemäßen Verfahrens zweckmäßig ist, sieht vor, dass das Kraftfahrzeug als weiteres Fahrzeugsystem eine heckseitig angeordnete Außenairbageinrichtung zur Verringerung der lichten Höhe der Karosserie über dem Boden aufweist. Konkret kann die heckseitig angeordnete Außenairbageinrichtung ausgebildet sein wie die in DE 103 16 847 A1 beschriebene Unterfahrschutzeinrichtung, kann mithin ein Flächenelement aufweisen, das mittels eines Airbags aus einer eingefahrenen Ruhelage in eine ausgefahrene Schutzstellung bewegbar ist, insbesondere reversibel. Selbstverständlich sind jedoch auch andere Ausgestaltungen einer solchen Außenairbageinrichtung denkbar, beispielsweise solche, in denen die Karosserieerweiterungsfläche durch einen Airbag selbst gebildet wird und dergleichen. Auf diese Weise kann auch ein Kraftfahrzeug, dem ein Unterfahrunfall von hinten droht, heckseitig aktiv Maßnahmen zur Erhöhung der Sicherheit einleiten.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: zwei Kraftfahrzeuge in einer möglichen Unterfahrunfallsituation, und
- Fig. 2: eine Realisierung einer Außenairbageinrichtung am Heck eines Kraftfahrzeugs.

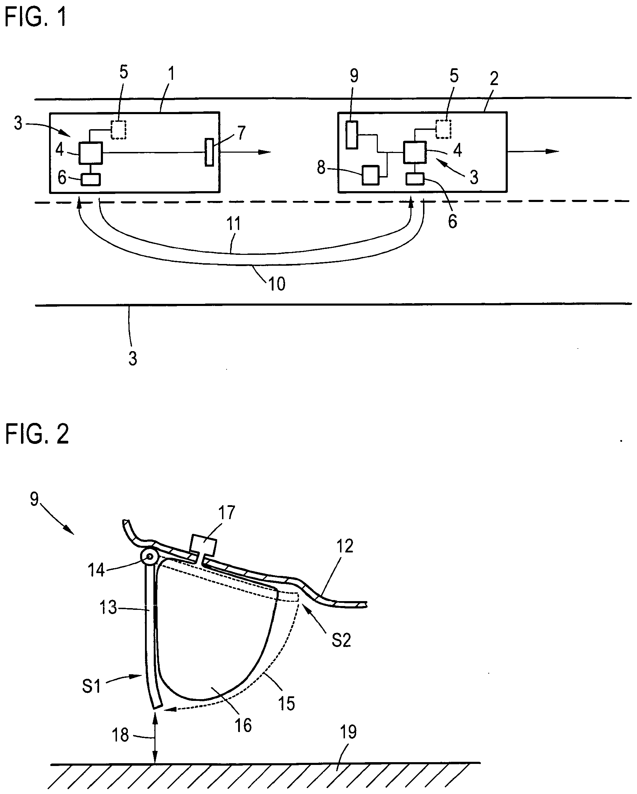

Fig. 1 zeigt zwei erfindungsgemäße Kraftfahrzeuge 1, 2 auf einer Straße 3. Dabei handelt es sich bei dem Kraftfahrzeug 2 um ein SUV, bei dem Kraftfahrzeug 1 um einen deutlich niedrigeren Sportwagen, wobei auch die lichte Höhe zwischen der Karosserie des Kraftfahrzeugs 2 und der Fahrbahn höher ist als die lichte Höhe zwischen der Karosserie des Kraftfahrzeugs 1 und der Fahrbahn. Beide Kraftfahrzeuge weisen ein Sicherheitssystem 3 mit einem zur Durchführung des erfindungsgemäßen Verfahrens ausgebildeten Steuergerät 4 auf. Das Steuergerät 4 ist über ein Bussystem, beispielsweise einen CAN-Bus, mit durch den Kasten 5 angedeuteten sonstigen Fahrzeugsystemen verbunden, von denen nur einige der Übersichtlichkeit halber konkret gezeigt sind, nämlich zunächst eine in beiden Kraftfahrzeugen vorgesehene Kraftfahrzeug-zu-Kraftfahrzeug-Kommunikationseinrichtung 6 sowie für Maßnahmen, die auf die Verhinderung und/oder Folgenminderung eines Unterfahrunfalls zielen, ausführende Fahrzeugsysteme, im Kraftfahrzeug 1 eine frontseitig vorgesehene Außenairbageinrichtung 7 und im Kraftfahrzeug 2 ein aktives Fahrwerksystem 8 und eine heckseitig vorgesehene Außenairbageinrichtung 9.

Bremst das Kraftfahrzeug 2 nun stark ab, führt es eine Nickbewegung aus, so dass ein hoher Nickwinkel aus der Vertikalen entsteht, das bedeutet, dass Heck des Kraftfahrzeugs 2 hebt sich. Damit ist eine von mehreren im Steuergerät 4 vorgesehenen Übersendebedingungen erfüllt, denn der Nickwinkel des Kraftfahrzeugs 2 übersteigt einen vorgegebenen Schwellwert. Da sich nämlich das Heck des Kraftfahrzeugs 2 hebt, ist die Wahrscheinlichkeit für ein Unterfahren bei einer Kollision mit dem auffahrenden Kraftfahrzeug 1 deutlich erhöht. Gemäß dem Pfeil 10 wird die Kraftfahrzeug-zu-Kraftfahrzeug-Kommunikationseinrichtung 6 des Kraftfahrzeugs 2 genutzt, eine den Nickwinkel umfassende Unterfahrunfallinformation an das Kraftfahrzeug 1 zu übertragen, die zusätzlich noch weitere Daten enthalten kann, vorliegend in jedem Fall auch einen Fahrzeugtyp des Kraftfahrzeugs 2, hier also "SUV", aus dem Karosserieeigenschaften des Kraftfahrzeugs 2 hervorgehen. Nachdem in dem Steuergerät 4 ständig die Kollisionssituation überwacht wird, mithin durch Verarbeitung von Umfelddaten und den Betriebszustand des Kraftfahrzeugs 2 beschreibenden Egodaten ermittelte, eine mögliche Kollision mit dem Kraftfahrzeug 1 beschreibende Kollisionsparameter, können auch diese wenigstens teilweise Teil der Unterfahrunfallinformation sein. In diesem Kontext sei angemerkt, dass auch weitere Übersendungskriterien gegeben sein können, insbesondere solche, die bei einer hohen Kollisionswahrscheinlichkeit und/oder einer niedrigen TTC eine Übersendung der Unterfahrunfallsituation auslösen.

Wird die Unterfahrunfallinformation durch die Kraftfahrzeug-zu-Kraftfahrzeug-Kommunikationseinrichtung 6 des Kraftfahrzeugs 1 empfangen und an das Steuergerät 4 des Kraftfahrzeugs 1 weitergeleitet, werden zwei Aktionen ausgelöst: zum einen wird nach Art eines "Request-Response-Verfahrens" eine Unterfahrunfallinformation des Kraftfahrzeugs 1 gemäß dem Pfeil 11 an das Kraftfahrzeug 2 übertragen, zum anderen ist das Steuergerät 4 nun in der Lage, was nach Empfang der entsprechenden Unterfahrunfallinformation des Kraftfahrzeugs 1 durch das Kraftfahrzeug 2 auch für das Steuergerät.4 des Kraftfahrzeugs 2 gilt, einen auf einen Unterfahrunfall bezogenen Kollisionsparameter in Abhängigkeit des empfangenen Nickwinkels, des Nickwinkels des eigenen Kraftfahrzeugs 1, 2 sowie den Karosserieinformationen, konkret dem übertragenen Fahrzeugtyp, zu ermitteln, welcher beispielsweise eine Wahrscheinlichkeit für einen Unterfahrunfall sein kann. Selbstverständlich ist es auch denkbar, dass mehrere auf einen Unterfahrunfall bezogene Kollisionsparameter ermittelt werden.

Diese so ermittelten Kollisionsparameter können nun beispielsweise unter Verwendung von Auslösekriterien, mithin speziellen Kollisionskriterien, ausgewertet werden, um zu bestimmen, ob wenigstens eine auf die Verhinderung und/oder Folgenminderung eines Unterfahrunfalls zielende Maßnahme ausgelöst wird. Erkennen die Kraftfahrzeuge 1, 2 nun, dass aufgrund des beispielsweise auch bremsenden, mithin eintauchenden, Kraftfahrzeugs 1 und des ohnehin stark bremsenden Kraftfahrzeugs 2 ein Unterfahrunfall mit großer Wahrscheinlichkeit bevorsteht, können die weiteren Fahrzeugsysteme 7, 8, 9 zur Durchführung von ein Unterfahren möglichst vermeidenden, kollisionsfolgemindernden Maßnahmen angesteuert werden. So kann beispielsweise sicherheitshalber bereits recht früh die Außenairbageinrichtung 9 aktiviert werden, um die lichte Höhe zwischen der Karosserie des Kraftfahrzeugs 2 und der Fahrbahn zu verringern; ferner kann kurz vor dem Aufprall, also bei niedriger TTC, der hier reversibel ausgebildete Außenairbag der Außenairbageinrichtung 7 aufgeblasen werden, dessen Außenseite selbst als Flächenerweiterung der Karosserie des Kraftfahrzeugs 1 wirkt und diese mithin erhöht. So wird ein Unterfahren mit hoher Wahrscheinlichkeit vermieden. Unterstützt werden kann dies dadurch, dass das aktive Fahrwerksystem 8 die Karosserie des Kraftfahrzeugs 2 zusätzlich absenkt. Mithin werden die Bedingungen im Kollisionsbereich gezielt zur Vermeidung eines Unterfahrens verändert.

Es sei noch darauf hingewiesen, dass im Vergleich zu den hier beschriebenen eventbasierten Übersendungen der eigenen Nickwinkel, die im Übrigen über Egosensoren der jeweiligen Kraftfahrzeuge 1, 2 bestimmt werden, auch eine zyklische Übersendung der Nickwinkel denkbar ist.

Fig.2 zeigt die Ausgestaltung der Außenairbageinrichtung 9, die am Heck des Kraftfahrzeugs 2 vorgesehen ist, genauer. Die Außenairbageinrichtung 9 ist an einem eckseitigen Teil der Karosserie 12 des Kraftfahrzeugs 2 vorgesehen. Sie umfasst ein vorliegend aus Metall oder Kunststoff bestehendes Flächenelement 13, welches über ein Schwenklager 14 reversibel zwischen zwei Stellungen bewegbar ist, wobei die ausgefahrene Stellung S1 durchgezogen dargestellt ist, die eingeklappte und eng an der Karosserie 12 anliegende Stellung S2, welche die übliche Betriebsstellung ist, gestrichelt.

Zur Bewegung des Flächenelements 13 zwischen den Stellungen S1 und S2 gemäß dem Doppelpfeil 15 ist erfindungsgemäß ein Außenairbag 16 vorgesehen, der in Fig. 2 entsprechend der Stellung S1 luftgefüllt gezeigt ist. Über eine vorliegend reversibel arbeitende Ent- und Belüftungseinrichtung 17 kann der Airbag 16 mit Luft gefüllt werden oder die Luft kann aus dem Airbag wieder entzogen werden. Alternativ kann selbstverständlich auch eine reversibel arbeitende, beispielsweise auf einem pyrotechnischen Element basierende Belüftungseinrichtung für den Airbag 16 vorgesehen sein, wobei das Flächenelement 13 dann in der Stellung S1 verbleibt.

Ersichtlich wirkt das Flächenelement 13 in der Stellung S1 als eine Erweiterung der Karosserie 12 und verkürzt die lichte Höhe 18 zur Fahrbahn 19 erheblich.

Dabei muss im Übrigen nicht zwangsläufig ein Flächenelement 13 vorgesehen sein, so dass beispielsweise eine Oberfläche des Airbags 16 selbst die gewünschte Erweiterung der Karosserie 12 zur Verfügung stellen kann.

## Patentansprüche

1. Verfahren zum Betrieb eines Sicherheitssystems (3) eines ersten Kraftfahrzeugs (1, 2) zur Kollisionsvermeidung und/oder Kollisionsfolgenminderung, wobei wenigstens ein die mögliche Kollision mit einem zweiten Kraftfahrzeug (2, 1) beschreibender Kollisionsparameter durch Auswertung von Umfelddaten über das Umfeld des eigenen Kraftfahrzeugs (1, 2) und Egodaten über das eigene Kraftfahrzeug (1, 2) ermittelt wird und bei Erfüllung wenigstens eines den Kollisionsparameter auswertenden Kollisionskriteriums wenigstens ein weiteres Fahrzeugsystem zur Durchführung einer Maßnahme angesteuert wird,
**dadurch gekennzeichnet,**
**dass** wenigstens ein auf einen Unterfahrunfall bezogener Kollisionsparameter in Abhängigkeit eines von dem zweiten Kraftfahrzeug (2, 1) über Kraftfahrzeug-zu-Kraftfahrzeug-Kommunikation übermittelten Nickwinkels des zweiten Kraftfahrzeugs (2, 1) ermittelt und zur Auslösung einer auf die Verhinderung und/oder Folgenminderung eines Unterfahrunfalls zielenden Maßnahme bei Erfüllung eines Auslösekriteriums ausgewertet wird.

2. Verfahren nach Anspruch 1,
**dadurch gekennzeichnet,**
**dass** das bei der Ermittlung des auf einen Unterfahrunfall bezogenen Kollisionsparameters zusätzlich wenigstens ein Nickwinkel des eigenen Kraftfahrzeugs (1, 2) und/oder eine auf die lichte Höhe (18) der Karosserie (12) über dem Boden (19) und/oder die Gesamthöhe der Karosserie (12) über dem Boden (19) im möglichen Kollisionsbereich bezogene Karosserieinformationen beider Kraftfahrzeuge (1, 2) berücksichtigt werden.

3. Verfahren nach Anspruch 2,
**dadurch gekennzeichnet,**
**dass** als Karosserieinformation des zweiten Kraftfahrzeugs (2, 1) ein insbesondere über Kraftfahrzeug-zu-Kraftfahrzeug-Kommunikation übertragenes Fahrzeugtypdatum und/oder Fahrzeugklassendatum verwendet wird.

4. Verfahren nach einem der vorangehenden Ansprüche,
**dadurch gekennzeichnet,**
**dass** bei Erfüllung eines Übersendungskriteriums eine den Nickwinkel des eigenen Kraftfahrzeugs (1, 2) umfassende Unterfahrunfallinformation über Kraftfahrzeug-zu-Kraftfahrzeug-Kommunikation an das zweite Kraftfahrzeug (2, 1) übertragen wird.

5. Verfahren nach Anspruch 4,
**dadurch gekennzeichnet,**
**dass** als Übersendungskriterium das Überschreiten eines Schwellwerts für den Nickwinkel und/oder die Bremsverzögerung des eigenen Kraftfahrzeugs (1, 2) und/oder ein wenigstens einen Kollisionsparameter auswertendes, die Möglichkeit eines Unterfahrunfalls beschreibendes Übersendungskriterium verwendet wird.

6. Verfahren nach Anspruch 4 oder 5,
**dadurch gekennzeichnet,**
**dass** bei Empfang eines Nickwinkels des zweiten Kraftfahrzeugs (2, 1) als Übersendungskriterium dem zweiten Kraftfahrzeug (2, 1) die Unterfahrunfallinformation über Kraftfahrzeug-zu-Kraftfahrzeug-Kommunikation übermittelt wird.

7. Verfahren nach einem der vorangehenden Ansprüche,
**dadurch gekennzeichnet,**
**dass** als eine auf die Verhinderung und/oder Folgenminderung eines Unterfahrunfalls zielende Maßnahme eine auf den möglichen Unterfahrunfall bezogene Maßnahmeninformation an das zweite Kraftfahrzeug (2, 1) übermittelt wird.

8. Verfahren nach Anspruch 7,
**dadurch gekennzeichnet,**
**dass** bei Empfang einer Maßnahmeninformation wenigstens eine auf die Verhinderung und/oder Folgenminderung eines Unterfahrunfalls zielende Folgemaßnahme eingeleitet wird.

9. Verfahren nach einem der vorangehenden Ansprüche,
**dadurch gekennzeichnet,**
**dass** als auf die Verhinderung und/oder Folgenminderung eines Unterfahrunfalls zielende Maßnahme im Bereich der möglichen Kollision ein die Gesamthöhe der Karosserie (12) über dem Boden (19) und/oder die lichte Höhe (18) der Karosserie (12) über dem Boden (19) beeinflussendes Fahrzeugsystem aktiviert wird.

10. Verfahren nach Anspruch 9,
**dadurch gekennzeichnet,**
**dass** das aktivierte Fahrzeugsystem als Maßnahme einen insbesondere eine Karosserieerweiterungsfläche bewegenden Außenairbag (16) auslöst.

11. Verfahren nach Anspruch 9 oder 10,
**dadurch gekennzeichnet,**
**dass** das aktivierte Fahrzeugsystem, insbesondere ein aktives Fahrwerksystem (8), wenigstens eine Höheneinstellung der gesamten Karosserie (12) verändert und/oder den Nickwinkel des eigenen Kraftfahrzeugs (1, 2) beeinflusst.

12. Kraftfahrzeug (1, 2), umfassend ein Sicherheitssystem (3) mit einem zur Durchführung eines Verfahrens nach einem der vorangehenden Ansprüche ausgebildeten Steuergerät (4).

13. Kraftfahrzeug nach Anspruch 12,
**dadurch gekennzeichnet,**
**dass** das Kraftfahrzeug (1, 2) als weiteres Fahrzeugsystem eine heckseitig angeordnete Außenairbageinrichtung (9) zur Verringerung der lichten Höhe (18) der Karosserie (12) über dem Boden (19) aufweist.

## Claims

1. Method for operating a safety system (3) of a first motor vehicle (1, 2) to prevent a collision and/or minimise the consequences of a collision, wherein at least one collision parameter describing the potential collision with a second motor vehicle (2, 1) is determined by evaluating environmental data about the environment of the individual motor vehicle (1, 2) and ego data about the individual motor vehicle (1, 2), and at least one further vehicle system is triggered to perform an action in response to the fulfilment of at least one collision criterion evaluating the collision parameter,
**characterised in that**,
at least one collision parameter relating to an underride accident is determined depending on a pitch angle of the second motor vehicle (2, 1) transmitted by the second motor vehicle (2, 1) by means of vehicle-to-vehicle communication and is evaluated to trigger an action aimed at preventing and/or minimising the consequences of an underride accident in response to the fulfilment of a triggering criterion.

2. Method according to Claim 1,
**characterised in that**,
in response to the determination of the collision parameter relating to an underride accident, additionally at least one pitch angle of the individual motor vehicle (1, 2) and/or vehicle body information of both motor vehicles (1, 2) relating to the clearance height (18) of the vehicle body (12) above the ground (19) and/or the overall height of the vehicle body (12) above the ground (19) in the potential collision area is taken into account.

3. Method according to Claim 2,
**characterised in that**,
data regarding vehicle make and/or vehicle model, transmitted in particular by means of vehicle-to-vehicle communication, is used as vehicle body information of the second motor vehicle (2, 1).

4. Method according to any one of the preceding claims,
**characterised in that**,
in response to the fulfilment of a transmission criterion, underride accident information including the pitch angle of the individual motor vehicle (1, 2) is transmitted to the second motor vehicle (2, 1) by means of vehicle-to-vehicle communication.

5. Method according to Claim 4,
**characterised in that**,
the exceeding of a threshold value for the pitch angle and/or the braking delay of the individual motor vehicle (1, 2) and/or a transmission criterion evaluating at least one collision parameter and describing the possibility of an underride accident is used as the transmission criterion.

6. Method according to Claim 4 or 5,
**characterised in that**,
in response to receiving a pitch angle of the second vehicle (2, 1), the underride accident information is transmitted to the second vehicle (2, 1) as transmission criterion by means of vehicle-to-vehicle communication.

7. Method according to any one of the preceding claims,
**characterised in that**,
action information relating to the potential underride accident is transmitted to the second motor vehicle (2, 1) as an action aimed at preventing and/or minimising the consequences of an underride accident.

8. Method according to Claim 7,
**characterised in that**,
at least one follow-up action aimed at preventing and/or minimising the consequences of an underride accident is initiated in response to receiving action information.

9. Method according to any one of the preceding claims,
**characterised in that**,
a vehicle system influencing the overall height of the vehicle body (12) above the ground (19) and/or the clearance height (18) of the vehicle body (12) above the ground (19) is activated as action aimed at preventing and/or minimising the consequences of an underride accident in the area of the potential collision.

10. Method according to Claim 9,
**characterised in that**,
as action, the activated vehicle system deploys an external airbag (16) moving in particular a vehicle body extension area.

11. Method according to Claim 9 or 10,
**characterised in that**,
the activated vehicle system, in particular an active chassis frame system (8), changes at least one height setting of the whole vehicle body (12) and/or influences the pitch angle of the individual vehicle (1, 2).

12. Motor vehicle (1, 2), comprising a safety system (3) having a control device (4) configured to carry out a method according to any one of the preceding claims.

13. Motor vehicle according to Claim 12,
**characterised in that**,
as a further vehicle system, the motor vehicle (1, 2) has an external airbag mechanism (9) arranged at the rear to reduce the clearance height (18) of the vehicle body (12) above the ground (19).

## Revendications

1. Procédé de fonctionnement d'un système de sécurité (3) d'un premier véhicule automobile (1, 2) pour éviter une collision et/ou réduire les conséquences d'une collision, selon lequel on détermine au moins un paramètre de collision décrivant la collision possible avec un deuxième véhicule automobile (2, 1) en évaluant des données d'environnement concernant l'environnement du véhicule automobile considéré (1, 2) et des données particulières concernant le véhicule automobile considéré (1, 2) et selon lequel, si au moins un critère de collision évaluant le paramètre de collision est satisfait, on commande au moins un autre système de véhicule pour l'exécution d'une action,
**caractérisé en ce qu'**on détermine au moins un paramètre de collision relatif à un accident avec encastrement en fonction d'un angle d'inclinaison longitudinale du deuxième véhicule automobile (2, 1), angle transmis par le deuxième véhicule automobile (2, 1) via une communication de véhicule à véhicule, et on l'évalue pour déclencher une action visant à empêcher un accident avec encastrement et/ou à réduire les conséquences de celui-ci lorsqu'un critère de déclenchement est satisfait.

2. Procédé selon la revendication 1, **caractérisé en ce que**, lors de la détermination du paramètre de collision relatif à un accident avec encastrement, on prend aussi en compte au moins un angle d'inclinaison longitudinale du véhicule automobile considéré (1, 2) et/ou des informations de carrosserie des deux véhicules automobiles (1, 2) relatives à la hauteur libre (18) de la carrosserie (12) au-dessus du sol (19) et/ou à la hauteur totale de la carrosserie (12) au-dessus du sol (19) dans la zone de collision possible.

3. Procédé selon la revendication 2, **caractérisé en ce que**, comme information de carrosserie du deuxième véhicule automobile (2, 1), on utilise une donnée de type de véhicule et/ou une donnée de classe de véhicule qui sont transmises notamment via la communication de véhicule à véhicule.

4. Procédé selon l'une des revendications précédentes, **caractérisé en ce que**, lorsqu'un critère d'envoi est satisfait, on transmet une information d'accident avec encastrement comprenant l'angle d'inclinaison longitudinale du véhicule automobile considéré (1, 2) au deuxième véhicule automobile (2, 1) via une communication de véhicule à véhicule.

5. Procédé selon la revendication 4, **caractérisé en ce que**, comme critère d'envoi, on utilise le dépassement d'une valeur de seuil pour l'angle d'inclinaison longitudinale et/ou pour la décélération de freinage du véhicule automobile considéré (1, 2) et/ou un critère d'envoi évaluant au moins un paramètre de collision et décrivant la possibilité d'un accident avec encastrement.

6. Procédé selon la revendication 4 ou 5, **caractérisé en ce que**, lors de la réception d'un angle d'inclinaison longitudinale du deuxième véhicule automobile (2, 1), on transmet comme critère d'envoi au deuxième véhicule automobile (2, 1) l'information d'accident avec encastrement via une communication de véhicule à véhicule.

7. Procédé selon l'une des revendications précédentes, **caractérisé en ce que**, comme action visant à empêcher un accident avec encastrement et/ou à réduire les conséquences de celui-ci, on transmet au deuxième véhicule automobile (2, 1) une information d'action relative à l'accident avec encastrement possible.

8. Procédé selon la revendication 7, **caractérisé en ce que**, lors de la réception d'une information d'action, on déclenche au moins une action de suivi visant à empêcher un accident avec encastrement et/ou à réduire les conséquences de celui-ci.

9. Procédé selon l'une des revendications précédentes, **caractérisé en ce que**, comme action visant à empêcher un accident avec encastrement et/ou à réduire les conséquences de celui-ci, on active dans la zone de la collision possible un système de véhicule influençant la hauteur totale de la carrosserie (12) au-dessus du sol (19) et/ou la hauteur libre (18) de la carrosserie (12) au-dessus du sol (19).

10. Procédé selon la revendication 9, **caractérisé en ce que** le système de véhicule activé déclenche comme action un airbag extérieur (16) déplaçant notamment une surface d'extension de carrosserie.

11. Procédé selon la revendication 9 ou 10, **caractérisé en ce que** le système de véhicule activé, notamment un système de châssis actif (8), modifie au moins un réglage en hauteur de l'ensemble de la carrosserie (12) et/ou influence l'angle d'inclinaison longitudinale du véhicule automobile considéré (1, 2).

12. Véhicule automobile (1, 2), comprenant un système de sécurité (3) avec un appareil de commande (4) conçu pour la mise en oeuvre d'un procédé selon l'une des revendications précédentes.

13. Véhicule automobile selon la revendication 12, **caractérisé en ce que** le véhicule automobile (1, 2) comporte comme autre système de véhicule un dispositif d'airbag extérieur (9) agencé à l'arrière pour réduire la hauteur libre (18) de la carrosserie (12) au-dessus du sol (19).
